# EUROPÄISCHE PATENTSCHRIFT

(11) **EP 4 405 195 B1**
(45) Veröffentlichungstag und Bekanntmachung des Hinweises auf die Patenterteilung: **31.12.2025**
(21) Anmeldenummer: 22782709.4
(22) Anmeldetag: 14.09.2022
(51) Int. Cl.: B60L 3/00, B60L 53/30, B60L 53/62, B60L 53/67, B60L 53/68, B60L 53/31

(54) **VERFAHREN ZUR ERMITTLUNG DEFEKTER LADESTATIONEN**
METHOD FOR DETERMINING DEFECTIVE CHARGING STATIONS
PROCÉDÉ DE DÉTERMINATION DES STATIONS DE CHARGE DÉFECTUEUX

(30) Priorität: 21.09.2021 DE 102021004761
(43) Veröffentlichungstag der Anmeldung: 31.07.2024
(73) Patentinhaber: Mercedes-Benz Group AG, 70372 Stuttgart (DE)
(72) Erfinder: KIRCHNER, Florian, 72074 Tübingen (DE); SCHÖCK, Karsten, 71083 Herrenberg (DE); SEIFERLEIN-SCHNEIDER, Daniel, 75365 Calw (DE); DRECHSLER, Frederike, 89077 Ulm (DE); FOLLI, Dominik, 70563 Stuttgart (DE)
(74) Vertreter: Novagraaf Group
(86) Internationale Anmeldenummer: PCT/EP2022/075480
(87) Internationale Veröffentlichungsnummer: WO 2023/046542

(56) Entgegenhaltungen:
- EP-A1- 2 894 436
- EP-A1- 3 517 351
- DE-A1- 102009 036 816
- DE-A1- 102015 210 325
- FR-A1- 3 077 038
- KR-A- 20190 126 627

## Beschreibung

Die Erfindung betrifft ein Verfahren zur Ermittlung defekter Ladestationen für batterieelektrisch antreibbare Fahrzeuge nach der im Oberbegriff von Anspruch 1 näher definierten Art.

Ladestationen, oftmals auch als Ladesäulen bezeichnet, ermöglichen das Wiederaufladen von Traktionsbatterien von Fahrzeugen. Ladestationen gibt es in verschiedensten Ausführungen. So unterscheiden sich Ladestationen beispielsweise über ihre Ladeschnittstelle, also einen verwendbaren Stecker bzw. Buchsentyp, sowie durch den zum Laden verwendeten Strom. So gibt es Ladestationen, welche je eine Ladeschnittstelle zum Laden mit Gleichstrom, Wechselstrom und/oder Drehstrom aufweisen, wobei jeweils verschiedene Spannungen und/oder Stromstärken und dementsprechend unterschiedliche Ladeleistungen bereitgestellt werden können. Je höher die Ladeleistung, desto schneller lässt sich typischerweise eine Traktionsbatterie aufladen.

Der Ladevorgang an einer Ladestation dauert im Vergleich zum Befüllen eines Tanks mit flüssigem Kraftstoff vergleichsweise lange, was es erforderlich macht, Ladevorgänge mit einem batterieelektrisch antreibbaren Fahrzeug, insbesondere bei der Durchführung weiter Reisen, im Voraus zu planen. Hierzu wird sich eine fahrzeugführende Person typischerweise darüber informieren an welchen Stellen sich entlang ihrer Reiseroute Ladestationen befinden und welche Randbedingungen zum Laden vorliegen, also beispielsweise eine Anzahl an Ladestationen am jeweiligen Standort, eine Auslastung, sprich Belegung der jeweiligen Ladestationen, Strompreise und dergleichen. Hierzu kann die fahrzeugführende Person auch einen Ladestoppplanungsassistenten nutzen. Aus diversen Gründen kann eine Ladestation beim Eintreffen des Fahrzeugs nicht verfügbar sein, beispielsweise aufgrund eines Defekts. Dies ist insbesondere für hochfrequentierte Orte mit einer begrenzten Anzahl an Ladestationen wie einer Autobahnraststätte ärgerlich, da somit Fahrzeuge gegebenenfalls warten müssen, bis eine Ladestation frei wird bzw. nicht alle Fahrzeuge gleichzeitig laden können.

Ladestationen können typischerweise einen Status erfassen und an Dritte, beispielsweise einen Betreiber der Ladestationen, übermitteln. Der Status kann beispielsweise einen der Zustände "zur Verfügung", "im Einsatz/belegt", "deaktiviert" oder "außer Betrieb" umfassen. Dabei ist es jedoch möglich, dass eine Ladestation ihren tatsächlichen Zustand falsch erfasst, also beispielsweise eine Funktionsstörung aufweist, jedoch den Zustand "Zur Verfügung" übermittelt. Hierdurch kann der Nutzerkomfort für eine fahrzeugführende Person eines batterieelektrisch antreibbaren Fahrzeugs eingeschränkt werden, da die fahrzeugführende Person gegebenenfalls davon ausgeht ihr Fahrzeug an der defekten Ladestation laden zu können. Eine falsche Erfassung kann natürlich auch in der Übermittlung eines anderen Zustands, beispielsweise "belegt", münden.

Es liegt somit der Bedarf vor, verbesserte Verfahren zur Ermittlung tatsächlich defekter Ladestationen bereitzustellen.

Aus der WO 2021/089914 A1 sind ein Verfahren und eine Vorrichtung zur Bewertung der Zuverlässigkeit von Ladestationen für Elektrofahrzeuge bekannt. Gemäß des in der Druckschrift offenbarten Verfahrens werden von einer Recheneinheit die über die Zeit für eine Ladestation erhobenen Nutzungsdaten analysiert und diese auf das Vorhandensein einer Mindestanzahl durchgeführter Ladevorgänge an der Ladestation mit einer unter einem festgelegten Grenzwert liegenden Ladedauer hin untersucht. In Abhängigkeit der Anzahl solcher Ladevorgänge wird dann ein Zuverlässigkeitsfaktor für diese Ladestation ermittelt. In diese Berechnung können auch weitere Größen eingehen, wie beispielsweise eine Auslastung der Ladestation, eine Anzahl an Ladevorgängen, bei denen lediglich eine unter einem festgelegten Grenzwert liegende Energiemenge übertragen wurde, eine Anzahl fehlgeschlagener Ladevorgänge oder dergleichen.

Ein ähnliches Verfahren zur Überwachung von Ladestationen ist auch aus der WO 2021/028615 A1 bekannt. Das Verfahren sieht die Verwendung eines maschinellen Lernmodells vor, um von einem Ladestationsnetzwerk empfangene Nutzungsdaten von Ladestationen zu analysieren. Mit Hilfe des in der Druckschrift offenbarten Verfahrens können Ladestationen mit Fehlfunktionen erkannt sowie künftig ausfallende Ladestationen mit einem Wahrscheinlichkeitswert vorhergesagt werden. Hierzu können nicht nur die Nutzungsdaten einer Ladestation, sondern die Nutzungsdaten mehrerer Ladestationen des Ladestationsnetzwerks ausgewertet werden.

Zudem offenbart die FR 3 077 038 A1 ein gattungsgemäßes Verfahren zur Ermittlung von Ladestationen für batterieelektrisch antreibbare Fahrzeuge, welches die im Oberbegriff von Anspruch 1 angegebenen Merkmale aufweist.

Zudem offenbart die EP 2 894 436 A1 ein System und Verfahren zur Unterstützung von Ladevorgängen. Dabei werden Informationen eines Elektrofahrzeugs erhoben, welche den Reisezustand des Elektrofahrzeugs beschreiben sowie Ladestationsinformationen, die mit einem Vorrichtungszustand und einem Benutzungszustand seitens des Elektrofahrzeugs zusammenhängen. Anhand der Informationen des Elektrofahrzeugs wird ermittelt, ob das Elektrofahrzeug geladen werden muss. Durch einen Abgleich der Informationen des Elektrofahrzeugs und der Ladestationsinformationen wird eine zum Durchführen eines Ladevorgangs geeignete Ladestation ermittelt und eine Navigationsroute zur Ladestation für das Fahrzeug bestimmt. Zur Auswahl einer geeigneten Ladestation kann dabei berücksichtigt werden, ob die Ladestation einen Defekt aufweist oder nicht.

Zudem offenbart die DE 10 2015 210 325 A1 ein Verfahren und System zur Überwachung von Ladestationen. Dabei werden Ladestationen durch die an einer respektiven Ladestation einen Ladevorgang durchführenden Fahrzeuge überwacht.

Zudem offenbart die DE 10 2009 036 816 A1 die Steuerung von Ladestationen.

Ferner offenbart die EP 3 517 351 A1 ein Fahrzeug, ein Ladegerät, ein Ladesystem mit einem solchen Ladegerät und ein Anomaliediagnoseverfahren für das Ladegerät.

Ferner offenbart die KR 2019 0126627 A ein Verfahren und eine Vorrichtung zur Empfehlung einer optimalen Ladestation basierend auf der Wartezeit eines Elektroautos. Nebeneinander installierte Ladestationen lassen sich dabei einem gemeinsamen Ladestationscluster zuordnen.

Der vorliegenden Erfindung liegt die Aufgabe zugrunde, ein verbessertes Verfahren zur Ermittlung defekter Ladestationen für batterieelektrisch antreibbare Fahrzeuge anzugeben, welches eine besonders zuverlässige Aussage ermöglicht, ob eine Ladestation tatsächlich ausgefallen ist oder zur Durchführung von Ladevorgängen zur Verfügung steht.

Erfindungsgemäß wird diese Aufgabe durch ein Verfahren zur Ermittlung defekter Ladestationen für batterieelektrisch antreibbare Fahrzeuge mit den Merkmalen des Anspruchs 1 gelöst. Vorteilhafte Ausgestaltungen und Weiterbildungen ergeben sich aus den hiervon Ansprüchen.

Bei einem Verfahren zur Ermittlung defekter Ladestationen der eingangs genannten Art, übertragen Ladestationen Nutzungsdaten an eine zentrale Recheneinheit zur Analyse, woraufhin die zentrale Recheneinheit eine Fehlfunktion zumindest einer Ladestation ermittelt, wenn zumindest ein von den Nutzungsdaten umfasster Nutzungsparameter außerhalb eines festgelegten Sollbereichs liegt, wobei erfindungsgemäß wenigstens zwei in einem festgelegten geographischen Areal nebeneinander stationierte Ladestationen eines oder mehrerer Ladestationsnetzwerke einem gemeinsamen Ladestationscluster zugeordnet werden und jeweils der Sollbereich der einzelnen Nutzungsparameter aus den Nutzungsdaten zumindest einer als Referenzladestation klassifizierten Ladestationen des Ladestationsclusters abgeleitet wird und eine Gruppe von Referenzladestationen zum Ableiten der jeweiligen Sollbereiche berücksichtigt wird, wobei als Referenzladestation solche Ladestationen verwendet werden, deren jeweilige Nutzungsparameter innerhalb einer festgelegten Toleranzschwelle übereinstimmen.

Mit Hilfe des erfindungsgemäßen Verfahrens lässt sich die Aussagegenauigkeit, ob eine Ladestation tatsächlich defekt ist, gegenüber bekannten Verfahren verbessern. Dies begründet sich in dem direkten Vergleich örtlich in einer Nähe zueinander stationierter Ladestationen, da solche Ladestationen ein ähnliches Nutzungsverhalten aufweisen und damit einen direkten Vergleich des Nutzungsverhaltens erlauben, wodurch "typische" Nutzungsmuster und entsprechend Abweichungen zu diesen typischen Nutzungsmustern feststellbar sind. Durch diese Bestimmung einer "atypischen" Nutzung zumindest einer Ladestation entfällt beispielsweise das Erfordernis, dass eine Person eine defekte Ladestation erst manuell melden muss, um diese als defekte Ladestation zu erkennen.

Bei dem festgelegten geographischen Areal handelt es sich beispielsweise um einen Parkplatz eines Einkaufzentrums oder Möbelhauses, um eine Autobahnraststätte, um einen Straßenabschnitt oder dergleichen. Nebeneinander meint in diesem Zusammenhang eine mittelbare oder unmittelbare Stationierung der Ladestationen in einer Nähe zueinander. Der Abstand zweier unmittelbar nebeneinander stationierter Ladestationen liegt typischerweise in einer Größenordnung von einer oder mehrerer Fahrzeugbreiten, beziehungsweise Fahrzeuglängen. Bei mittelbar zueinander beabstandeten Ladestationen können sich Hindernisse wie beispielsweise Bäume, Mauern, Laternen, Grünflächen, Gebäude, Gebäudeabschnitte oder auch Parkflächen ohne Ladestation zwischen den einzelnen zu einem Ladestationscluster gehörenden Ladestationen befinden. Die Ladestationen können in einer Reihe oder auch in mehreren Reihen, beispielsweise matrixförmig, zueinander angeordnet sein. Die einzelnen Reihen können dabei auch zueinander versetzt sein und/oder mit einem Winkel zueinander gekippt sein. Es kann auch eine Ladestation mehrere, beispielsweise zwei, Ladeschnittstellen zum gleichzeitigen Laden mehrerer Fahrzeuge aufweisen.

Beispielsweise wird ein Ladestationscluster von vier zwischen einem Bürgersteig und einer Fahrbahn stationierten, in einer Reihe unmittelbar nebeneinander liegenden Ladestationen (und entsprechenden Parkflächen) vor einem Restaurant ausgebildet. Bei einem anderen Ladestationscluster befinden sich beispielsweise zwei Ladestationen vor einer ersten Gebäudeseite eines Hochhauses und zwei weitere Ladestationen auf der der jeweiligen Gebäudeseite gegenüberliegenden Seite des Hochhauses. Hier lassen sich die vier Ladestationen trotzdem einem gemeinsamen Ladestationscluster zuordnen, obwohl sich ein Hochhaus zwischen den einzelnen Ladesäulenpaaren befindet, da das Nutzungsverhalten der vier Ladesäulen gleich ist, sich also dieselben typischen Nutzungsmuster aus den Nutzungsparametern erkennen lassen.

Beispielsweise bestimmt die zentrale Recheneinheit zumindest eine Referenzladestation. Die zentrale Recheneinheit kann beispielsweise genau eine Ladestation als Referenzladestation bestimmen. Hierzu wählt die zentrale Recheneinheit zum Beispiel die neuste Ladestation, also die Ladestation, welche zuletzt installiert wurde aus, da aufgrund der neuen Komponenten eine Fehlfunktion gegenüber älteren Ladestationen unwahrscheinlicher ist. Es wird dann das Nutzungsverhalten der Referenzladestation betrachtet. Auf die verschiedenen Nutzungsparameter wird später noch eingegangen, wobei als Nutzungsparameter an dieser Stelle beispielhaft eine Ladedauer eines Ladevorgangs erwähnt wird. Für die Referenzladestation liegt die Ladedauer von über 78% an der Referenzladestation in einem festgelegten Zeitintervall, beispielsweise ein Tag, eine Woche oder mehrere Monate, durchgeführten Ladevorgänge in einem Wertebereich von 30-40 Minuten. Dieser Wertebereich wird dann als Sollbereich für die weiteren Ladestationen des Ladestationsclusters verwendet. Weist dann eine solche Ladestation eine festgelegte Anzahl an Ladevorgängen auf, beispielsweise bereits einen, oder beispielsweise zumindest 50% der an dieser Ladestation in einem festgelegten Zeitintervall durchgeführten Ladevorgänge, bei dem/denen die Ladedauer lediglich 5 Minuten oder beispielsweise ganze 60 Minuten beträgt, so wird ein Defekt, beziehungsweise eine Fehlfunktion für diese Ladestation ermittelt. Eine "zu kurze" Ladedauer kann vorliegen, wenn eine fahrzeugführende Person frühzeitigt bemerkt, dass ein Ladevorgang nicht auf vorgesehene Art und Weise erfolgt, beispielsweise aufgrund einer zu geringen Ladeleistung, und entsprechend den Ladevorgang beendet. Eine "zu lange" Ladedauer kann vorliegen, wenn die fahrzeugführende Person die Fehlfunktion nicht bemerkt, und dann beispielsweise die Traktionsbatterie des Fahrzeugs aufgrund der verringerten Ladeleistung erst nach 60 Minuten ausreichend geladen ist.

Die zentrale Recheneinheit kann beispielsweise auch vorgeben, dass nur "erfolgreiche" Ladevorgänge zur Bestimmung der gültigen Wertebereiche berücksichtigt werden sollen. Beispielsweise ist ein Ladevorgang nur dann erfolgreich, wenn eine festgelegte Mindestenergiemenge geladen wurde, beispielsweise 20 kWh.

Die unterschiedlichen Ladestationen eines gemeinsamen Ladestationsclusters können dabei einem oder mehreren Ladestationsnetzwerken zugeordnet sein. Bei einem Ladestationsnetzwerk handelt es sich beispielsweise um die Gesamtheit aller von einem bestimmten Anbieter betriebener Ladestationen. Das erfindungsgemäße Verfahren erlaubt es also, gleichzeitig die Ladestationen unterschiedlicher Anbieter, beispielsweise Allego, lonity, EnBW oder dergleichen zu vergleichen. Hierzu steht die zentrale Recheneinheit in Kommunikationsverbindung mit entsprechender Infrastruktur der Ladestationsnetzwerkbetreiber.

Zumindest eine Referenzladestation kann auch in Abhängigkeit von in den Nutzungsdaten erkannten Nutzungsmustern bestimmt werden.

Nutzungsmuster lassen sich auf vielfältige Art und Weise von der zentralen Recheneinheit in den über die Zeit von den Ladestationen empfangenen Nutzungsdaten erkennen. So kann beispielsweise dann ein Nutzungsmuster vorliegen, wenn ein jeweiliger Nutzungsparameter für einen festgelegten Anteil der an den Ladestationen eines Ladestationsclusters durchgeführten Ladevorgänge in einem nutzungsparameterindividuellen Wertebereich liegt. Der festgelegte Anteil kann beispielsweise eine Häufigkeit von mindestens 50%, 60%, 70%, 80% oder 90% der Ladevorgänge betragen. Ein entsprechender Nutzungsparameter (beispielsweise die Ladedauer) liegt also bei mehr als der Hälfte der in der festgelegten Zeitspanne an den Ladestationen des Ladestationsclusters durchgeführten Ladevorgänge im nutzungsparameterindividuellen Wertebereich (beispielsweise 30-45 Minuten). Zum Auffinden von Nutzungsmustern können auch mehrere Nutzungsparameter gleichzeitig betrachtet werden (beispielsweise eine Ladeleistung von X-Y kW, während eines Ladevorgangs von M bis N Minuten) und dabei auch mehrere Nutzungsparameter voneinander abhängen.

Wie oben beschrieben ist es dabei vorgesehen, dass eine Gruppe von Referenzladestationen, also wenigstens zwei Referenzladestationen, zum Ableiten der jeweiligen nutzungsparameterindividuellen Sollbereiche berücksichtigt wird, wobei als Referenzladestation solche Ladestationen verwendet werden, deren jeweilige Nutzungsparameter innerhalb einer festgelegten Toleranzschelle übereinstimmen. Hierdurch entfällt das Erfordernis, dass die zentrale Recheneinheit die Referenzladestation(en) willkürlich bestimmen muss. Mit anderen Worten werden automatisch die Ladestationen eines Ladestationsclusters als Referenzladestation bestimmt, aus denen sich auch das typische Nutzungsverhalten der Ladestationen ergibt. Hierdurch lässt sich das Risiko senken, dass beispielsweise aufgrund von Willkür eine solche Ladestation als Referenzladestation ausgewählt wird, welche eigentlich kein typisches Nutzungsverhalten zeigt, oder dieses zumindest verzerrt.

Rückbezogen auf das Beispiel der Ladedauer liegen die Ladedauern von drei Ladestationen eines vier Ladestationen umfassenden Ladestationsclusters für einen festgelegten Beobachtungszeitraum, beispielsweise einen Tag, zwei Wochen oder einen Monat, alle im Bereich zwischen 8 Minuten bis 125 Minuten. Für eine vierte, defekte Ladestation Ladestationsclusters liegt die Ladedauer sämtlicher Ladevorgänge jedoch im Bereich 30 Sekunden bis 2,5 Minuten und weicht damit signifikant von den Ladedauern der funktionstüchtigen Ladestationen ab. Entsprechend werden die funktionstüchtigen Ladestationen als Referenzladestation bestimmt und der Sollbereich für die Ladedauer beispielsweise auf 20-25 Minuten festgelegt, da 75% der Ladevorgänge in diesem Zeitfenster liegen. Wird anstelle von 75% ein größerer oder kleinerer Wert gewählt, verschiebt sich entsprechend die Ladedauer, beispielsweise auf 18-35 Minuten oder 21-22 Minuten.

Entsprechend einer weiteren vorteilhaften Ausgestaltung des erfindungsgemäßen Verfahrens werden mindestens die Hälfte der Ladestationen eines Ladestationsclusters als Referenzladestation verwendet. Durch Verwendung zumindest der Hälfte der Ladestationen eines Ladestationsclusters lassen sich besonders zuverlässig für ein Ladestationscluster typische Nutzungsparameter funktionstüchtiger Ladestationen ermitteln. Wird bei einem Ladestationscluster mit vier Ladestationen nur eine Ladestation als Referenzladestation verwendet, so besteht das Risiko, dass das Nutzungsverhalten dieser Ladestation das tatsächliche typische Nutzungsverhalten nur unzureichend abbildet. Es ist also unklar, welche Ladestation bei einer automatischen Auswahl als Referenzladestation bestimmt werden soll. Werden hingegen zumindest die Hälfte der Ladestationen eines Ladestationsclusters als Referenzladestation verwendet, lässt sich dieses Risiko senken, da somit eine größere Menge an Nutzungsdaten zum Auffinden von Nutzungsmustern berücksichtigt werden.

Das Vorgehen dabei ist so, dass zuerst die Nutzungsparameter sämtlicher Ladestationen für ein festgelegtes Zeitintervall ausgewertet werden. Für jeden Nutzungsparameter werden festgelegte Toleranzschwellen bestimmt, wie stark sich die Nutzungsparameter einzelner Ladesäulen unterscheiden dürfen, damit diese als Referenzladestation charakterisiert werden. Als Toleranzschwelle können feste Werte definiert werden, sodass gegebenenfalls keine Referenzladestationen gefunden werden können (beispielsweise weil sich die Ladestationen zu stark voneinander unterscheiden), oder diese Werte können in Abhängigkeit der von der zentralen Recheneinheit empfangenen Nutzungsparameter definiert werden. Dann werden die Referenzladestationen bestimmt und die Sollbereiche der Nutzungsparameter festgelegt. Es wird dann überprüft, ob die Nutzungsparameter der übrigen Ladestationen außerhalb der jeweiligen Sollbereiche liegen, beispielsweise, weil zumindest ein außerhalb des entsprechenden Sollbereichs liegender Ladevorgang durchgeführt wurde.

Beispielsweise liegt die Ladedauer für über 80% der an einer Ladestation durchgeführten Ladevorgänge bei der ersten Ladestation bei 23 - 31 Minuten, bei der zweiten Ladestation bei 18 - 22 Minuten, bei der dritten Ladestation bei 1 - 4 Minuten und bei der vierten Ladestation bei 24 - 29 Minuten. Demgemäß werden die erste, zweite und vierte Ladestation als Referenzladestation ausgewählt und der Sollbereich für die Dauer von Ladevorgängen beispielsweise auf 16 - 35 Minuten für mindestens 65% der an einer Ladestation durchgeführten Ladevorgänge bestimmt. Aufgrund des signifikanten Unterschieds wird dann die dritte Ladestation als defekt ermittelt.

Eine weitere vorteilhafte Ausgestaltung des Verfahrens sieht ferner vor, dass wenigstens zwei Ladestationscluster für ein Areal bestimmt werden. Die weitere Differenzierung von innerhalb eines Areals stationierter Ladestationen in mehr als ein Ladestationscluster erlaubt eine feinere Differenzierung der Nutzungsdaten der einzelnen Ladestationen und damit das Erkennen feinerer Unterschiede in den aus den Nutzungsparametern abgeleiteten bzw. in diesen erkannten Nutzungsmustern. Dies erlaubt ferner Ladestationen entsprechend ihrer Eigenschaften in einzelne Ladestationscluster einzuteilen. Dies erlaubt es, noch zuverlässiger funktionstüchtige von funktionsuntüchtigen Ladestationen zu unterscheiden.

Entsprechend einer weiteren vorteilhaften Ausgestaltung des erfindungsgemäßen Verfahrens wird zur Bestimmung, dass zumindest zwei Ladestationen nebeneinander in einem gemeinsamen Areal stationiert sind, zumindest eine der folgenden Ladestationseigenschaften überprüft:
- eine Geoposition;
- eine Identifikationsnummer;
- ein Identifikationsname;
- eine Identifikationsadresse; und/oder
- ein Arealtoken.

Generell ist es möglich, dass Ladestationen bestimmte Ladestationseigenschaften, beziehungsweise Metadaten, an die zentrale Recheneinheit übertragen bzw. die zentrale Recheneinheit die entsprechenden Ladestationseigenschaften von den Ladestationen abruft. Zu den Ladestationseigenschaften zählen beispielsweise eine Geoposition, eine eindeutige Identifikationsnummer, ein Identifikationsname, eine Identifikationsadresse und/oder ein Arealtoken. Zumindest ein Abschnitt der Identifikationsnummer von in einem Ladestationscluster angeordneter Ladestationen, also beispielsweise in einem bestimmten Straßenabschnitt einer durch einen Ort verlaufenden Straße installierter Ladestationen, kann gleich sein. Die Identifikationsnummer kann beispielsweise 15 Ziffern umfassen, wobei für die Ladestationen desselben Ladestationsclusters dann beispielsweise eine Ziffernfolge von fünf aufeinanderfolgenden Ziffern gleich ist. Entsprechendes gilt für einen Identifikationsnamen, bei dem anstelle von Ziffern Buchstaben verwendet werden. Es können auch Buchstaben und Ziffern und/oder Sonderzeichen gemischt werden. So kann generell eine Identifikationsadresse einer Ladestation einer beliebigen Kombination von Buchstaben, Ziffern und/oder Sonderzeichen wie Leerzeichen oder Bindestriche umfassen. Die Metainformationen können auch ein für das festgelegte geographische Areal oder zumindest einen Abschnitt des festgelegten geographischen Areals repräsentatives Arealtoken umfassen. Ein solches Arealtoken kann beispielsweise die Information umfassen: Parkplatz vor der Front des Restaurants XY mit der Adresse Hauptstraße 17 oder Autobahnraststättenparkplatz A5 Kilometer 217 Parkreihen 4 und 5. Die Geoposition kann beispielsweise Geokoordinaten, insbesondere GPS Koordinaten, umfassen. Mit Hilfe der genannten Ladestationseigenschaften ist eine eindeutige Positionsbestimmung eines Aufstellorts einer jeweiligen Ladestation möglich, was eine eindeutige Zuordnung von Ladestationen zu Ladestationsclustern erlaubt.

Eine weitere vorteilhafte Ausgestaltung des erfindungsgemäßen Verfahrens sieht ferner vor, dass zumindest einer der folgenden Nutzungsparameter zur Ausbildung der Nutzungsdaten verwendet wird:
- eine Ladespannung und/oder Stromstärke während eines Ladevorgangs;
- eine Ladeleistung während eines Ladevorgangs;
- eine Dauer eines Ladevorgangs;
- eine während eines Ladevorgangs übertragene Energiemenge;
- ein zeitliches Verhältnis einer Zeitdauer, zu der Ladevorgänge an einer Ladestation durchgeführt werden zu einer Nichtnutzungsdauer der Ladestation;
- eine Anzahl an Ladevorgängen für ein festgelegtes Zeitintervall;
- ein Diagnosezustand; und/oder
- eine Warnnachricht.

Zur Klassifizierung, ob es sich um eine funktionstüchtige oder eine funktionsuntüchtige Ladestation handelt, kann generell ein einzelner Nutzungsparameter von Ladestationen verglichen werden, oder es können auch beliebige Kombinationen daraus berücksichtigt werden. So kann beispielsweise die Ladespannung und/oder Stromstärke während eines Ladevorgangs mit einer Anzahl in einem festgelegten Zeitintervall durchgeführter Ladevorgänge verknüpft werden. So kann der Sollbereich einer funktionstüchtigen Ladestation beispielsweise vorsehen, dass innerhalb eines Tages nicht mehr als fünf Ladevorgänge durchgeführt werden dürfen mit einer Ladespannung unter beispielsweise 500 V und gleichzeitig mindestens 90 Prozent der am Tag an der Ladestation durchgeführten Ladevorgänge mit einer Ladespannung von über 500 V durchgeführt werden müssen. Es können generell auch mehr als zwei Nutzungsparameter verknüpft werden, also beispielsweise drei Nutzungsparameter. So kann beispielsweise der Sollbereich auch so definiert werden, dass dann die Ladevorgänge mindestens 20 Minuten andauern müssen, damit eine entsprechende Ladestation als funktionstüchtig kategorisiert wird.

Entsprechend einer weiteren vorteilhaften Ausgestaltung des erfindungsgemäßen Verfahrens werden nur solche Ladestationen in ein gemeinsames Ladestationscluster aufgenommen, deren Ladeschnittstellentyp übereinstimmt und/oder deren nutzbare Ladeleistung innerhalb einer festgelegten Toleranzschwelle übereinstimmt. Hierdurch lassen sich ähnliche Ladestationen in Ladestationsclustern integrieren. Hierdurch lässt sich verhindern, dass eine bestimmte Ladestation als defekt kategorisiert wird, weil sie konstruktiv nicht mit den anderen in der Nähe befindlichen Ladestationen übereinstimmt. Ferner ist es auch zu erwarten, dass sich ein Nutzungsverhalten von Ladestationen unterschiedlicher Bauart auch unterscheidet. So werden beispielsweise Ladestationen mit einer vergleichsweise hohen Ladeleistung typischerweise für kürzere Ladevorgänge genutzt, als Ladestationen mit einer geringeren Ladeleistung. Somit lässt sich ein jeweiliger Sollbereich für einzelne Nutzungsparameter noch größerer Übereinstimmung mit den Nutzungsparametern von funktionstüchtigen Ladestationen desselben Typs definieren.

So werden beispielsweise nur die Ladestationen in ein Ladestationscluster aufgenommen, welche die Ladeschnittstelle Combined Charging System (CCS) aufweisen. Diese Ladestationen können in Abhängigkeit ihrer Ladeleistung in einzelne Subcluster unterteilt werden, beispielsweise Ladeleistung kleiner 50 kW, Ladeleistung zwischen 50 bis 149 kW und Ladeleistung ab 150 kW.

Eine weitere vorteilhafte Ausgestaltung des erfindungsgemäßen Verfahrens sieht ferner vor, dass von der zentralen Recheneinheit zur Analyse der Nutzungsdaten künstliche Intelligenz eingesetzt wird. Mit Hilfe künstlicher Intelligenz lassen sich Nutzungsmuster in den Nutzungsdaten noch zuverlässiger erkennen, auch wenn keine logischen Zusammenhänge zwischen einzelnen unterschiedlichen Nutzungsparametern erwartet werden. Dies ermöglicht eine noch klarere Definition der Sollbereiche für funktionstüchtige Ladestationen. So kann ein entsprechendes Kl-Modell beispielsweise auch festlegen, bis zu welcher Toleranzschwelle sich die einzelnen Nutzungsparameter von Ladestationen unterscheiden dürfen, damit diese als Referenzladestation charakterisiert werden.

Bevorzugt wird eine Information über einen funktionstüchtigen oder funktionsuntüchtigen Betriebszustand zumindest einer Ladestation von der zentralen Recheneinheit zur Ausgabe an zumindest ein Fahrzeug übertragen. Entsprechend kann eine Information über eine aktuell funktionsuntüchtige oder eine künftig funktionsuntüchtige Ladestation von einer fahrzeugführenden Person zur Planung ihrer Reiseroute angewendet werden. So kann die fahrzeugführende Person darüber innformiert werden, dass das Durchführen eines geplanten Ladestopps an einer auf ihrer Route zu einem Urlaubsziel liegenden Autobahnraststätte wahrscheinlich nicht möglich sein wird, da eine zum Durchführen eines Ladestopps vorgesehene von einem Ladestationsbetreiber als funktionstüchtig und frei, also nicht belegt, markierte Ladestation tatsächlich funktionsuntüchtig ist. Somit wird die fahrzeugführende Person frühzeitig über die ausgefallene Ladestation informiert und kann entsprechend die Planung ihrer Reise anpassen. Hierdurch lässt sich der Nutzerkomfort für die fahrzeugführende Person verbessern, da mit Hilfe des erfindungsgemäßen Verfahrens zuverlässig verhindert wird, dass die fahrzeugführende Person einen Ladevorgang an einer funktionsuntüchtigen Ladestation durchführen möchte. Auch ist es möglich, dass entsprechende Informationen über einen Webclient abgerufen werden können, beispielsweise fahrzeugextern über ein mobiles Endgerät oder über einen PC mit bestehender Internetverbindung.

Die Übertragung von Informationen zwischen Ladestationen, Ladestationsclustern, Ladestationsnetzwerken, zentraler Recheneinheit und/oder Fahrzeugen kann auf beliebiger Art und Weise erfolgen. Eine Informationsübertragung kann beispielsweise kabelgebunden oder drahtlos erfolgen. Insbesondere wird zumindest ein Teil von Informationen über das Internet übertragen. Bevorzugt stehen Fahrzeuge über Mobilfunk in Kommunikationsverbindung mit der zentralen Recheneinheit.

Auch beim erfindungsgemäßen Verfahren besteht das Risiko, dass eine Ladestation falsch klassifiziert wurde. Es kann daher ein Konfidenzwert bestimmt werden, wie zuverlässig eine korrekte Klassifizierung einer Ladestation erfolgte und der Konfidenzwert im Fahrzeug angezeigt werden. Eine fahrzeugführende Person kann darauf aufbauend selbst entscheiden, ob sie der Einschätzung der zentralen Recheneinheit vertrauen möchte. Beispielsweise kann der Konfidenzwert in Abhängigkeit bestimmt werden, wie stark sich das Nutzungsverhalten der einzelnen Ladestationen eines Ladestationsclusters, insbesondere der Referenzladestationen, unterscheidet. Liegen jeweils die Nutzungsparameter der Ladestationen sehr nahe beieinander (weist beispielsweise die Toleranzschwelle mit der sich die jeweiligen Nutzungsparameter der Referenzladestationen unterscheiden dürfen also einen vergleichsweise kleinen Wert auf), so kann ein vergleichsweise hoher Konfidenzwert, beispielsweise 95% angegeben werden.

Weitere vorteilhafte Ausgestaltungen des erfindungsgemäßen Verfahrens zur Ermittlung defekter Ladestationen ergeben sich auch aus dem Ausführungsbeispiel, welches nachfolgend unter Bezugnahme auf die einzige Figur näher beschrieben wird.

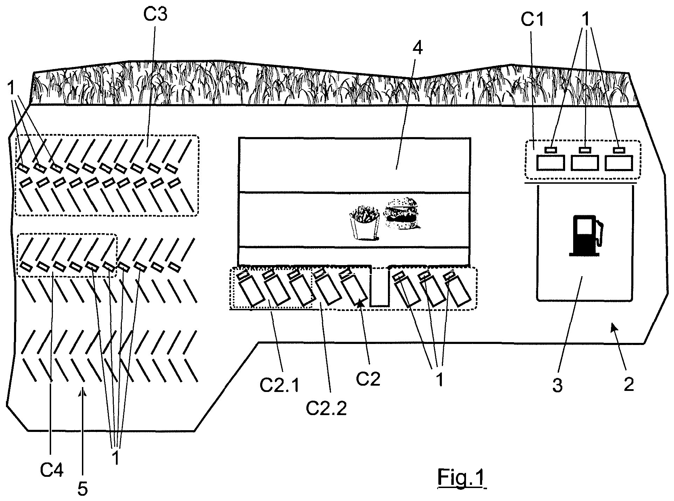

Dabei zeigt Figur 1 eine schematische Draufsicht auf ein Areal mit mehreren Ladestationen.

Figur 1 zeigt ein festgelegtes geographisches Areal 2, hier in Form einer Autobahnraststätte. Im Areal 2 befinden sich eine Tankstelle 3, ein Restaurant 4 sowie ein großer zusammenhängender Parkplatz 5. Neben der Tankstelle 3 und vor dem Restaurant 4 befinden sich einzelne Parkflächen. Die Parkflächen neben der Tankstelle 3, vor dem Restaurant 4 sowie einige der Parkflächen des Parkplatzes 5 weisen jeweils eine Ladestation 1 zum Durchführen von Ladevorgängen für batterieelektrisch antreibbare Fahrzeuge auf. Der Übersichtlichkeit halber sind nicht alle Ladestationen 1 mit einem Bezugszeichen versehen. Bei den batterieelektrisch antreibbaren Fahrzeugen kann es sich um ein rein batterieelektrisch antreibbare Fahrzeuge oder auch um Plugin-Hybridfahrzeuge handeln.

Über die Lebensdauer einer Ladestation 1 kommt es oftmals vor, dass ein Ladestationsbetreiber einen funktionstüchtigen Zustand einer Ladestation 1 meldet, die Ladestation 1 tatsächlich aber einen Defekt aufweist. Mit Hilfe eines erfindungsgemäßen Verfahrens lassen sich solche tatsächlich defekten Ladestationen 1 ermitteln. Hierzu wird die Nutzung von Ladestationen 1 zu benachbarten Ladestationen 1 verglichen. Dadurch lassen sich Abweichungen in typischen Nutzungsmustern erkennen, was auf einen Defekt einer Ladestation 1 hindeutet.

Hierzu werden im Areal 2 nebeneinander stationierte Ladestationen 1 in wenigstens ein Ladestationscluster C1, C2, C3, C4 eingeteilt. In dem Beispiel in Figur 1 wurden die Ladestationen 1 neben der Tankstelle 3 in ein erstes Ladestationscluster C1, die Ladestationen 1 vor dem Restaurant 4 in ein zweites Ladestationscluster C2 und einige der Parkflächen des Parkplatzes 5 in ein drittes Ladestationscluster C3 und einige der Parkflächen des Parkplatzes 5 in ein viertes Ladestationscluster C4 eingeteilt. Aufgrund der örtlichen Nähe der in den jeweiligen Ladestationsclustern C1-C4 eingeteilten Ladestationen 1 kann davon ausgegangen werden, dass sich das Nutzungsverhalten der jeweiligen Ladestationen 1 ähnelt. Dies ermöglicht es, eine Ladestation 1 als defekt zu klassifizieren, wenn das Nutzungsverhalten dieser Ladestation 1 von dem Nutzungsverhalten der benachbarte Ladestationen 1 des jeweiligen Ladestationsclusters abweicht.

Um das Abweichen von einem typischen Nutzungsverhalten zu erkennen, werden die von den einzelnen Ladestationen 1 an eine zentrale Recheneinheit übertragenen Nutzungsdaten analysiert und eine Fehlfunktion zumindest einer Ladestation 1 dann ermittelt, wenn zumindest ein Nutzungsparameter der Nutzungsdaten einer Ladestation 1 außerhalb eines festgelegten Sollbereichs liegt. Dieser Sollbereich wird erfindungsgemäß in Abhängigkeit der von den einzelnen Ladestationen 1 übermittelten Nutzungsdaten für jedes Ladestationscluster C1-C4 individuell festgelegt. Dies ermöglicht eine besonders genaue Definition der für funktionstüchtige Ladestationen 1 typischen Sollbereiche, wodurch entsprechend auch besonders zuverlässig defekte Ladestationen 1 aufgefunden werden können.

Beispielsweise kann die Auslastung der Ladesäulen für einen Zeitraum von einer Stunde ausgewertet werden. Beispielsweise liegt die Auslastung für die Ladesäulen 1 eines zweiten Subclusters C2.2, auf das später noch eingegangen wird, bei 91%, 93%, 8%, 6% und 94%. Der Sollbereich der Auslastung wird dann in Abhängigkeit der vorliegenden Auslastung bestimmt. Beispielsweise wird festgelegt, dass die einzelnen Ladestationen eine maximale Auslastungsabweichung von 35% zu mindestens der Hälfte der im zweiten Subcluster C2.2 befindlichen Ladestationen 1 aufweisen dürfen, um als funktionstüchtig zu gelten. Dies trifft auf die Ladestationen 1 mit der Auslastung von 91%, 93% und 94% zu. Dementsprechend ermittelt die zentrale Recheneinheit einen Defekt für die beiden Ladestationen 1 mit der Auslastung von 8% und 6%. In diesem Beispiel könnte als Toleranzschwelle anstelle von 35% auch ein geringerer Wert, beispielsweise 5% gewählt werden, da die maximale Abweichung zwischen der Ladestation 1 mit der Auslastung von 91% und der Ladestation 1 mit der Auslastung von 94% nur 3% beträgt. Entsprechende Toleranzschwellenwerte können hartprogrammiert sein, oder flexibel in Abhängigkeit der tatsächlichen Ausprägung der Nutzungsparameter bestimmt werden. Insbesondere ermittelt künstliche Intelligenz diese Toleranzschwellenwerte.

Damit Ladestationen 1 in ein gemeinsames Ladestationscluster C1-C4 aufgenommen werden, müssen diese nebeneinander aufgestellt sein. Nebeneinander meint in diesem Zusammenhang mittelbar oder unmittelbar nebeneinander. Dies bedeutet, dass generell auch alle der in Figur 1 in die Ladestationscluster C1-C4 zugeordnete Ladestationen 1 einem einzelnen Ladestationscluster (nicht dargestellt) zugeordnet werden könnten.

In Figur 1 sind einige Ladestationen 1, die sich in einer Reihe mit dem Ladestationscluster C4 befinden, nicht dem Ladestationscluster C4 zugeordnet. Dies kann verschiedene Gründe haben. Beispielsweise wurden diese Ladestationen 1 vom vierten Ladestationscluster C4 ausgeschlossen, weil sich die Ladestationen 1 konstruktiv unterscheiden. Beispielsweise umfassen die nicht zum vierten Ladestationscluster C4 hinzugefügten Ladestationen 1 eine abweichende Ladeschnittstelle und sollen somit von der Funktionstüchtigkeitsermittlung ausgeschlossen werden.

Ladestationen 1 können auch über die von ihnen bereitgestellte maximale Ladeleistung unterschieden werden. So kann beispielsweise das zweite Ladestationscluster C2 in zwei Subcluster C2.1 und C2.2 unterteilt sein. Dabei weisen die Ladestationen 1 des ersten Subclusters C2.1 beispielsweise eine maximale Ladeleistung von 50 bis 149 kW auf und die Ladestationen 1 des zweiten Subclusters C2.2 eine maximale Ladeleistung von über 150 kW. Entsprechend können auch mehr oder weniger Subcluster vorgesehen sein, wenn eine feinere Differenzierung nach Ladeleistung erfolgen soll.

## Patentansprüche

1. Verfahren zur Ermittlung defekter Ladestationen (1) für batterieelektrisch antreibbare Fahrzeuge, wobei die Ladestationen (1) Nutzungsdaten erheben, diese an eine zentrale Recheneinheit übertragen und die zentrale Recheneinheit die Nutzungsdaten analysiert, woraufhin die zentrale Recheneinheit eine Fehlfunktion zumindest einer Ladestation (1) ermittelt, wenn zumindest ein von den Nutzungsdaten umfasster Nutzungsparameter einer Ladestation (1) außerhalb eines festgelegten Sollbereichs liegt,
**dadurch gekennzeichnet, dass**
wenigstens zwei in einem festgelegten geographischen Areal (2) nebeneinander stationierte Ladestationen (1) eines oder mehrerer Ladestationsnetzwerke einem gemeinsamen Ladestationscluster (C1, C2, C3, C4) zugeordnet werden und jeweils der Sollbereich der einzelnen Nutzungsparameter aus den Nutzungsdaten zumindest einer als Referenzladestation klassifizierten Ladestationen (1) des Ladestationsclusters (C1, C2, C3, C4) abgeleitet wird; und
eine Gruppe von Referenzladestationen zum Ableiten der jeweiligen Sollbereiche berücksichtigt wird, wobei als Referenzladestation solche Ladestationen (1) verwendet werden, deren jeweilige Nutzungsparameter innerhalb einer festgelegten Toleranzschwelle übereinstimmen.

2. Verfahren nach Anspruch 1,
**dadurch gekennzeichnet, dass**
mindestens die Hälfte der Ladestationen (1) eines Ladestationsclusters (C1, C2, C3, C4) als Referenzladestation verwendet werden.

3. Verfahren nach Anspruch 1 oder 2,
**dadurch gekennzeichnet, dass**
wenigstens zwei Ladestationscluster (C1, C2, C3, C4) für ein Areal (2) bestimmt werden.

4. Verfahren nach einem der Ansprüche 1 bis 3,
**dadurch gekennzeichnet, dass**
zur Bestimmung, dass zumindest zwei Ladestationen (1) in einem gemeinsamen Areal (2) nebeneinander stationiert sind, zumindest eine der folgenden Ladestationseigenschaften überprüft wird:
- eine Geoposition;
- eine Identifikationsnummer;
- ein Identifikationsname;
- eine Identifikationsadresse; und/oder
- ein Arealtoken.

5. Verfahren nach einem der Ansprüche 1 bis 4,
**dadurch gekennzeichnet, dass**
zumindest einer der folgenden Nutzungsparameter zur Ausbildung der Nutzungsdaten verwendet wird:
- eine Ladespannung und/oder Stromstärke während eines Ladevorgangs;
- eine Ladeleistung während eines Ladevorgangs;
- eine Dauer eines Ladevorgangs;
- eine während eines Ladevorgangs übertragene Energiemenge;
- ein zeitliches Verhältnis einer Zeitdauer zu der Ladevorgänge an einer Ladestation (1) durchgeführt werden zu einer Nichtnutzungsdauer der Ladestation (1);
- eine Anzahl an Ladevorgängen für ein festgelegtes Zeitintervall;
- ein Diagnosezustand; und/oder
- eine Warnnachricht.

6. Verfahren nach einem der Ansprüche 1 bis 5,
**dadurch gekennzeichnet, dass**
nur solche Ladestationen (1) in ein gemeinsames Ladestationscluster (C1, C2, C3, C4) aufgenommen werden, deren Ladeschnittstellentyp übereinstimmt und/oder deren nutzbare Ladeleistung innerhalb einer festgelegten Toleranzschwelle übereinstimmt.

7. Verfahren nach einem der Ansprüche 1 bis 6,
**dadurch gekennzeichnet, dass**
von der zentralen Recheneinheit zur Analyse der Nutzungsdaten künstliche Intelligenz eingesetzt wird.

8. Verfahren nach einem der Ansprüche 1 bis 7,
**dadurch gekennzeichnet, dass**
eine Information über einen funktionstüchtigen oder funktionsuntüchtigen Betriebszustand zumindest einer Ladestation (1) von der zentralen Recheneinheit zur Ausgabe an zumindest ein Fahrzeug übertragen wird.

## Claims

1. Method for determining defective charging stations (1) for vehicles which can be driven using electricity from a battery, wherein the charging stations (1) collect usage data, transmit said data to a central computing unit, and the central computing unit analyzes the usage data, after which the central computing unit determines a malfunction of at least one charging station (1) if at least one usage parameter of a charging station (1) included in the usage data is outside of a specified target range,
**characterized in that**
at least two charging stations (1) of one or more charging station networks that are located next to one another in a defined geographical area (2) are assigned to a common charging station cluster (C1, C2, C3, C4), and the target range of each of the individual usage parameters is derived from the usage data of at least one charging station (1) of the charging station cluster (C1, C2, C3, C4) that is classified as a reference charging station; and
a group of reference charging stations is taken into account to derive the respective target ranges, wherein those charging stations (1) whose respective usage parameters correspond within a specified tolerance threshold are used as reference charging stations.

2. Method according to claim 1,
**characterized in that**
at least half of the charging stations (1) of a charging station cluster (C1, C2, C3, C4) are used as reference charging stations.

3. Method according to claim 1 or 2,
**characterized in that**
at least two charging station clusters (C1, C2, C3, C4) are determined for an area (2).

4. Method according to any of claims 1 to 3,
**characterized in that**
in order to determine that at least two charging stations (1) are located next to one another in a common area (2), at least one of the following charging station properties is checked:
- a geoposition;
- an identification number;
- an identification name;
- an identification address; and/or
- an area token.

5. Method according to any of claims 1 to 4,
**characterized in that**
at least one of the following usage parameters is used to form the usage data:
- a charging voltage and/or current strength during a charging process;
- a charging capacity during a charging process;
- a duration of a charging process;
- an amount of energy transferred during a charging process;
- a temporal ratio of a period of time during which charging processes are carried out at a charging station (1) to a period of non-use of the charging station (1);
- a number of charging processes for a specified time interval;
- a diagnostic state; and/or
- a warning message.

6. Method according to any of claims 1 to 5,
**characterized in that**
only those charging stations (1) whose charging interface type corresponds and/or whose usable charging capacity corresponds within a specified tolerance threshold are included in a common charging station cluster (C1, C2, C3, C4).

7. Method according to any of claims 1 to 6,
**characterized in that**
artificial intelligence is used by the central computing unit to analyze the usage data.

8. Method according to any of claims 1 to 7,
**characterized in that**
information about a functional or non-functional operating state of at least one charging station (1) is transmitted from the central computing unit to at least one vehicle for output.

## Revendications

1. Procédé permettant d'identifier des stations de charge (1) défectueuses pour des véhicules à propulsion électrique par batterie, dans lequel les stations de charge (1) collecte des données d'utilisation, transmet celles-ci à une unité de calcul centrale et l'unité de calcul centrale analyse les données d'utilisation, après quoi l'unité de calcul centrale identifie un dysfonctionnement d'au moins une station de charge (1) lorsqu'au moins un paramètre d'utilisation d'une station de charge (1), lequel paramètre d'utilisation est compris dans les données d'utilisation, se situe en dehors d'une plage de consigne prédéterminée,
**caractérisé en ce**
**qu'**au moins deux stations de charge (1), stationnées l'une à côté de l'autre dans une zone (2) géographique prédéterminée, d'un ou de plusieurs réseaux de stations de charge sont affectées à un cluster de stations de charge (C1, C2, C3, C4) commun et respectivement la plage de consigne des paramètres d'utilisation individuels est déduite des données d'utilisation d'au moins une station de charge (1) du cluster de stations de charge (C1, C2, C3, C4), laquelle station de charge est classée comme station de charge de référence ; et
un groupe de stations de charge de référence est pris en compte pour la déduction des plages de consigne respectives, dans lequel les stations de charge (1) utilisées comme stations de charge de référence sont celles dont les paramètres d'utilisation respectifs coïncident à l'intérieur d'un seuil de tolérance prédéterminé.

2. Procédé selon la revendication 1,
**caractérisé en ce**
**qu'**au moins la moitié des stations de charge (1) d'un cluster de stations de charge (C1, C2, C3, C4) sont utilisées comme station de charge de référence.

3. Procédé selon la revendication 1 ou 2,
**caractérisé en ce**
**qu'**au moins deux clusters de stations de charge (C1, C2, C3, C4) sont déterminés pour une zone (2).

4. Procédé selon l'une des revendications 1 à 3,
**caractérisé en ce**
pour la détermination qu'au moins deux stations de charge (1) sont stationnées l'une à côté de l'autre dans une zone (2) commune, la vérification d'au moins l'une des caractéristiques de station de charge suivantes est effectuée :
- une géoposition ;
- un numéro d'identification ;
- un nom d'identification ;
- une adresse d'identification ; et/ou
- un jeton de zone.

5. Procédé selon l'une des revendications 1 à 4,
**caractérisé en ce**
**qu'**au moins l'un des paramètres d'utilisation suivants est utilisé pour la réalisation des données d'utilisation :
- une tension de charge et/ou une intensité de courant lors d'un processus de charge ;
- une puissance de charge lors d'un processus de charge ;
- une durée d'un processus de charge ;
- une quantité d'énergie transférée lors d'un processus de charge ;
- un rapport temporel entre une durée pendant laquelle des processus de charge sont effectués sur une station de charge (1) et une durée de non-utilisation de la station de charge (1) ;
- un nombre de processus de charge pour un intervalle de temps prédéterminé ;
- un état de diagnostic ; et/ou
- un message d'avertissement.

6. Procédé selon l'une des revendications 1 à 5,
**caractérisé en ce que**
seules les stations de charge (1) dont le type d'interface de charge concorde et/ou dont la puissance de charge utilisable concorde à l'intérieur d'un seuil de tolérance prédéterminé sont intégrées dans un cluster de stations de charge (C1, C2, C3, C4) commun.

7. Procédé selon l'une des revendications 1 à 6,
**caractérisé en ce**
**qu'**une intelligence artificielle est utilisée par l'unité de calcul centrale pour l'analyse des données d'utilisation.

8. Procédé selon l'une des revendications 1 à 7,
**caractérisé en ce**
**qu'**une information sur un état de fonctionnement fonctionnel ou non fonctionnel d'au moins une station de charge (1) est transmise par l'unité de calcul centrale pour la délivrance à au moins un véhicule.
